# EUROPÄISCHE PATENTANMELDUNG

(11) **EP 2 298 595 A2**
(43) Veröffentlichungstag der Anmeldung: **23.03.2011**
(21) Anmeldenummer: 10167008.1
(22) Anmeldetag: 23.06.2010
(51) Int. Cl.: B60N 2/48

(54) **Vorrichtung zum Verstellen einer Kopfstütze**

(30) Priorität: 18.09.2009 DE 102009041840
(71) Anmelder: Muhr und Bender KG, 57439 Attendorn (DE)
(72) Erfinder: Schott, Patrick, 35708, Haiger (DE); Schneider, Jürgen, 57586, Weitefeld (DE); Enkrich, Georg, 56414, Salz (DE); Mintkewitz, Georg, 57629, Atzelgift (DE); Hentschel, Stephan, 57439, Attendorn (DE)
(74) Vertreter: Oberwalleney, Stephan

(57) **Zusammenfassung**

Die Erfindung betrifft eine Vorrichtung zum Verstellen einer Kopfstütze, insbesondere für einen Sitz in einem Kraftfahrzeug. Die Vorrichtung umfasst einen Grundkörper (3), einen Schiebekörper (4) und zumindest zwei Führungseinheiten (5), mit denen der Schiebekörper (4) gegenüber dem Grundkörper (3) in eine Verschieberichtung (R) linear verschiebbar geführt ist; wobei die Führungseinheiten (5) jeweils einen Führungssteg (6) aufweisen, der mit einem der beiden Teile, Grundkörper (3) oder Schiebekörper (4), fest verbunden ist, sowie zumindest zwei Stützelemente (7), die an dem anderen der beiden Teile, Schiebekörper (4) oder Grundkörper (3), angeordnet sind, wobei die zumindest zwei Stützelemente (7) den Führungssteg (6) senkrecht zur Verschieberichtung (R) abstützen. Die Erfindung betrifft ferner eine Kopfstützanordnung mit einer solchen Verstellvorrichtung.

## Beschreibung

Die Erfindung betrifft eine Verstellvorrichtung zum Verstellen einer Kopfstütze für einen Fahrzeugsitz, die eine Verstellung in Fahrzeuglängsrichtung ermöglichen soll, sowie eine Kopfstütze mit einer solchen Verstellvorrichtung.

Aus der DE 10 2007 048 151 B3 ist eine einstellbare Kopfstütze für einen Fahrzeugsitz bekannt, die eine Längseinstellung und eine Höheneinstellung einer Kopfstütze gestattet. Es ist ein Positionseinstellmechanismus vorgesehen, um die Kopfstütze an verschiedenen Höhen- und Längspositionen zu halten. Der Positionseinstellmechanismus umfasst eine Sperreinrichtung zum Sperren der Kopfstütze in der Richtung nach vorne und nach hinten. Die Sperreinrichtung hat eine Lösetaste, die einen Betätigungsbalken mit einer Zahnstange betätigt. Die Zahnstange ist über ein Zahnrad mit einer Sperrwelle verbunden, wobei durch Verdrehen des Zahnrads in eine Löseposition die vordere Schale der Kopfstütze automatisch in die vorderste Position verschoben wird.

Aus der DE 10 2006 016 270 A1 ist eine Kopfstütze für einen Kraftfahrzeugsitz bekannt, die ein in Fahrzeuglängsrichtung linear bewegbar geführtes Kopfanlageteil aufweist. Zwischen dem Kopfanlageteil und einem Basiskörper der Kopfstütze ist ein eine Druckfeder vorgesehen, die bei einem Heckaufprall entlastet wird und das Kopfanlageteil vom Basiskörper weg nach vorne beaufschlagt.

Aus der DE 43 05 909 A1 ist eine verstellbare Kraftfahrzeug-Kopfstütze bekannt, die einen höhenverstellbaren Träger umfasst, an dessen Ende ein Kopfstützkissen über ein Drehelement befestigt ist. Zur Einstellung des Kopfstützkissens in Längsrichtung ist ein Halteelement vorgesehen, das an dem Drehelement linear verstellbar angebracht ist.

Aus der DE 296 14 978 U1 ist ein Fahrzeugsitz mit einer an der Rückenlehne verstellbaren Kopfstütze bekannt. Die Kopfstütze ist bei einem Heckaufprall des Fahrzeugs in eine an den Kopf des Insassen angenäherte Rückhaltestellung bewegbar. Hierfür ist die Kopfstütze durch einen Bowdenzug mit einer fahrzeugsensitiv aktivierbaren Stellvorrichtung verbunden. Der Bowdenzug greift an einem Lagerungsabschnitt der Kopfstütze an, der in einer Linearführung aufgenommen ist.

Der vorliegenden Erfindung liegt die Aufgabe zugrunde, eine Vorrichtung zum Verstellen einer Kopfstütze, insbesondere für einen Sitz in einem Kraftfahrzeug, vorzuschlagen, die eine lineare Verstellung in Längsrichtung ohne Verkippen ermöglicht, die einfach aufgebaut und kostengünstig herstellbar ist.

Die Lösung besteht in einer Vorrichtung zum Verstellen einer Kopfstütze, insbesondere für einen Sitz in einem Kraftfahrzeug, umfassend einen Grundkörper; einen Schiebekörper; und zumindest zwei Führungseinheiten, mit denen der Schiebekörper gegenüber dem Grundkörper in eine Verschieberichtung (R) linear verschiebbar geführt ist; wobei die Führungseinheiten jeweils einen Führungssteg aufweisen, der mit einem der beiden Teile, Grundkörper oder Schiebekörper, fest verbunden ist, sowie zumindest zwei Stützelemente, die an dem anderen der beiden Teile, Schiebekörper oder Grundkörper, angeordnet sind, wobei die zumindest zwei Stützelemente den Führungssteg senkrecht zur Verschieberichtung (R) abstützen.

Der Vorteil der erfindungsgemäßen Vorrichtung besteht darin, dass der Schiebekörper mittels der zumindest zwei Führungseinheiten leicht und ohne zu Verkippen gegenüber dem Grundkörper linear verschoben werden kann. Dies ist insbesondere von Wichtigkeit, wenn die Kopfstütze nur mit einer Hand verstellt wird bzw. bei einem außermittigen Kraftangriff an die Kopfstütze. Durch die Abstützung der Führungsstege senkrecht zur Verschieberichtung der Kopfstütze wird eine sichere Führung der Kopfstütze bei der Rückwärts- oder Vorwärtsbewegung realisiert. Vorzugsweise ist der Grundkörper fest mit zumindest einem Kopfstützbügel verbunden, beispielsweise mittels Schweißen. Der Schiebekörper ist fest mit der Kopfstütze bzw. mit einem Kopfanlageteil der Kopfstütze verbunden.

Nach einer bevorzugten Ausgestaltung weisen die Stützelemente der Führungseinheiten Rollenkörper auf, die an einem der beiden Teile, Grundkörper oder Schiebekörper, drehbar gelagert sind. Die zugehörigen Führungsstege sind am jeweils anderen der beiden Teile angeordnet. Je Führungseinheit sind vorzugsweise zwei Paare von Rollenkörpern vorgesehen, so dass eine besonders leichtgängige Führung und gute Abstützung über der Länge ergibt. Insbesondere ist vorgesehen, dass die beiden Führungseinheiten in Bezug auf eine Mittelebene symmetrisch aufgebaut sind. Die Führungsstege der beiden Führungseinheiten befinden sich nach einer ersten Möglichkeit in einer Ebene, die vorzugsweise horizontal angeordnet oder an eine Horizontale angenähert ist. Die Führungsstege können aber auch winklig zur Horizontalebene bzw. zur Mittelebene ausgerichtet sein.

Für eine sichere Führung und zur Vermeidung von ungewünschten Geräuschen ist vorgesehen, dass die zumindest zwei Führungsstege mit Vorspannung zwischen den Rollenkörpern gehalten sind. Dabei sind die Rollenkörper vorzugsweise so gestaltet, dass die Führungsstege in senkrechter Richtung und in horizontaler bzw. seitlicher Richtung abgestützt sind. Hierfür sind die sind die Rollenkörper nach einer ersten Ausführungsform im wesentlichen zylindrisch gestaltet. Für eine besonders gute seitliche Abstützung weist zumindest einer der Rollenkörper eines Paares von Rollenkörpern einen umlaufenden Kragen sowie einen abgesetzten zylindrischen Abschnitt auf. Nach einer alternativen Ausführungsform können die Rollenkörper der Führungseinheiten kegelig ausgeführt sein, wobei dann die Führungsstege mit einer Längsmittelebene der Vorrichtung jeweils einen Winkel einschließen, der kleiner als 90°, insbesondere kleiner 60°, ist. Die Öffnungswinkel der Kegelflächen der Rollenkörper eines Paares von Rollenkörpern weisen in entgegengesetzte Richtungen. Durch die Verwendung von Rollenkörpern mit kegeliger Anlagefläche und entsprechend winkligen Führungsstegen wird in vorteilhafter Weise eine gute Abstützung des Führungskörpers gegenüber dem Grundkörper in Längsrichtung, d. h. in Richtung des Verschiebeweges, sowie in Querrichtung erreicht. Für beide Ausführungsformen gilt, dass es für eine hohe Vorspannung günstig ist, wenn die Rollenkörper aus einem elastischen Material, beispielsweise einem Kunststoff ausgebildet sind.

Nach einer bevorzugten Ausgestaltung sind Federmittel vorgesehen, die zwischen dem Grundkörper und dem Schiebekörper wirksam sind. Die Federmittel sind vorzugsweise in Form einer Zugfeder gestaltet, z. B. als Schraubenfeder oder als Rollfeder, die zumindest etwa in Verschieberichtung R wirkt. Es ist jedoch prinzipiell auch die Verwendung einer Druckfeder denkbar, die zwischen dem Grundkörper und dem Schiebekörper wirksam eingesetzt ist. Die Federmittel sind vorzugsweise so gestaltet, dass sie den Schiebekörper in eine eingeschobene erste Position vorspannen bzw. beaufschlagen, in der der Schiebekörper an den Grundkörper angenähert ist, das heißt, in der der Schiebekörper in den Grundkörper zumindest teilweise eingeschoben bzw. auf diesen aufgeschoben ist. Bevorzugt ist, wenn die Federkennlinie der Federmittel degressiv ist, so dass die Auszugskraft über dem Verstellbereich möglichst konstant ist. Es ist aber auch die Verwendung einer Feder mit linearer Kennlinie denkbar. Es kann ein Dämpfer vorgesehen sein, der die Einschubbewegung des Schiebekörpers relativ zum Grundkörper geräuschmindernd dämpft.

Je nach Ausgestaltung des Grundkörpers und des Schiebekörpers kann letzterer in den Grundkörper eingeschoben werden, wenn der Grundkörper als Außengehäuse und der Schiebekörper als Innengehäuse gestaltet ist, oder auf diesen aufgeschoben werden, wenn der Schiebekörper als Außengehäuse und der Grundkörper als Innengehäuse gestaltet ist. Eine besonders einfacher Aufbau bei gleichzeitig hoher Festigkeit wird erreicht, wenn der Schiebekörper als Umformteil aus Blech oder als Strangpressprofil, z. B. aus Stahl oder Aluminium, hergestellt ist. Vorzugsweise hat der Schiebekörper ein im Querschnitt betrachtet etwa U-förmiges Profil, wobei die Führungsstege an den Schenkeln des Profils ausgebildet sein können, insbesondere von diesem seitlich abstehen. Der Grundkörper ist nach einer bevorzugten Ausgestaltung ebenfalls als Umformteil aus Blech, z. B. aus Stahl, hergestellt, und insbesondere rahmenförmig gestaltet. Es versteht sich, dass der Grundkörper und der Schiebekörper auch aus einem anderem Material hergestellt sein können, z. B. Kunststoff.

Für eine gute Einstellbarkeit der Kopfstütze in Längsrichtung ist nach einer bevorzugten Ausgestaltung ein Rastmechanismus vorgesehen, der zwischen dem Grundkörper und dem Schiebekörper wirksam ist und der derart gestaltet ist, dass der Schiebekörper gegenüber dem Grundkörper mehrere definierte Rastpositionen einnehmen kann, die zwischen der eingeschobenen Position und der ausgezogenen Position liegen. Dabei wird der Schiebekörper gegenüber dem Grundkörper an einer Bewegung in die eingerückte Position gehindert. Der Rastmechanismus umfasst mehrere Rastausnehmungen, die an einem der beiden Teile, Grundkörper oder Schiebekörper, vorgesehen sind, sowie ein Rastelement, das an dem anderen der beiden Teile, Schiebekörper oder Grundkörper, angebracht ist und das in die Rastausnehmungen eingreifen kann.

Das Rastelement ist zwischen einer ersten Position, in der es in die Rastausnehmungen eingreift, und einer zweiten Position, in der es außer Eingriff ist, bewegbar. Eine besonders günstige und kompakte Anordnung ergibt sich, wenn das Rastelement um eine Schwenkachse schwenkbar gelagert ist und insbesondere zwischen der ersten Position und der zweiten Position verschwenkbar ist. Dabei ist ein Federelement vorgesehen, welches das Rastelement in Richtung der ersten Position beaufschlagt. Das Rastelement kann gegen einen Endanschlag anschlagen, in der Schiebekörper in der vollständig eingeschobenen Stellung gegenüber dem Grundkörper gehalten ist.

Nach einer bevorzugten Ausgestaltung ist ein Betätigungselement vorgesehen, mit dem die Funktion des Rastmechanismus aufgehoben werden kann. Nach Aufheben der Rastfunktion wird der Schiebekörper von den Federmitteln vollständig in die eingerückte Position beaufschlagt. Das Aufheben der Rastfunktion geschieht dadurch, dass das Rastelement mittels des Betätigungselements entgegen der Vorspannkraft des Federelements bewegt wird. Insbesondere wird der Rastmechanismus dadurch entriegelt, dass das Rastelement durch Einwirken des Betätigungselements über eine Totpunktlage hinaus bewegt wird, wobei das Rastelement nach Überschreiten der Totpunktlage von dem Federelement in die zweite Position beaufschlagt wird. Mit anderen Worten ist das Federelement so gestaltet, dass es zwei stabile Stellungen einnehmen kann, nämlich eine erste Stellung, in der das Rastelement in die Rastposition beaufschlagt wird, und eine zweite Stellung, in der das Rastelement in die Freigabeposition beaufschlagt wird.

Das Betätigungselement kann gemäß einer ersten Variante so gestaltet sein, dass es die Funktion des Rastmechanismus automatisch aufhebt, wenn sich der Schiebekörper in der vollständig ausgezogenen Stellung relativ zum Grundkörper befindet. Gemäß einer zweiten Variante kann das Betätigungselement auch extern bedienbar sein, beispielsweise über eine an der Kopfstütze angebrachte Betätigungsvorrichtung. Dabei kann die Funktion des Rastmechanismus durch Betätigen der Betätigungsvorrichtung aufgehoben werden, und zwar insbesondere unabhängig von der Position des Schiebekörpers relativ zum Grundkörper. Es ist jedoch auch eine Kombination der beiden Varianten denkbar, d. h. mit automatischem und zusätzlich mit extern bedienbaren Betätigungselement.

Nach einer bevorzugten Ausgestaltung sind neben den Stützelementen der Führungseinheiten noch sekundäre Stützelemente vorgesehen, mit denen der Schiebekörper bei Zerstörung oder eingeschränkter Funktion der Führung, beispielsweise aufgrund eines Unfalls, gegenüber dem Grundkörper abstützbar ist. Die sekundären Stützelemente gewährleisten, dass die Kopfstütze auch bei einem Unfall sicher an dem Kopfstützbügel befestigt ist, so dass die Sicherheit des Insassen gewährleistet ist. Vorzugsweise umfassen die sekundären Stützelemente zumindest eine erste Stützfläche an einem ersten Ende des Grundkörpers sowie zumindest eine zweite Stützfläche an einem entgegengesetzten zweiten Ende des Grundkörpers, wobei die erste Stützfläche auf eine obere Anlagefläche des Führungskörpers einwirkt, und die zweite Stützfläche auf eine untere Anlagefläche des Führungskörpers einwirkt. Die Stützflächen sind vorzugsweise an von dem Grundkörper abgebogenen Laschen ausgebildet.

Die Lösung der obengenannten Aufgabe besteht weiter in einer Kopfstützenanordnung, insbesondere für einen Sitz eines Kraftfahrzeugs, die eine Kopfstütze und zumindest einen Kopfstützbügel umfasst, wobei die Kopfstütze mittels der erfindungsgemäßen Vorrichtung mit dem zumindest einen Kopfstützbügel verbunden ist, wobei der Grundkörper der Vorrichtung mit dem zumindest einen Kopfstützbügel fest verbunden ist, und der Schiebekörper der Vorrichtung zumindest mittelbar mit der Kopfstütze fest verbunden.

Die erfindungsgemäße Kopfstützanordnung bietet den Vorteil, dass sich die Kopfstütze auf einfache Weise gegenüber dem zumindest einen Kopfstützbügel in Längsrichtung, d. h. nach vorne oder nach hinten bewegen lässt. Dabei gewährleisten die zumindest zwei Führungseinheiten eine leichtgängige Betätigung, welche ein Verkanten oder Verkippen, auch bei außermittiger Krafteinleitung verhindert.

Bevorzugte Ausführungsbeispiele werden nachfolgend anhand der Zeichnungsfiguren erläutert. Hierin zeigt:
- Figur 1: eine erfindungsgemäße Vorrichtung zum Verstellen einer Kopfstütze in einer ersten Ausführungsform in einer ersten perspektivischen Ansicht;
- Figur 2: die Vorrichtung gemäß Figur 1 in perspektivischer Explosionsdarstellung;
- Figur 3: die Vorrichtung gemäß Figur 1 in perspektivischer Darstellung, teilweise geschnitten;
- Figur 4: die Vorrichtung gemäß Figur 1 in einer zweiten perspektivischen Darstel- lung;
- Figur 5: die Vorrichtung gemäß Figur 1 im Längsschnitt mit vollständig eingefahre- nem Führungskörper;
- Figur 6: die Vorrichtung gemäß Figur 1 in Seitenansicht mit vollständig ausgefah- renem Führungskörper;
- Figur 7: die Vorrichtung nach Figur 1 in Axialansicht;
- Figur 8: eine erfindungsgemäße Vorrichtung in einer zweiten Ausführungsform in perspektivischer Ansicht, teilweise geschnitten;
- Figur 9: die Vorrichtung gemäß Figur 8 im Längsschnitt mit vollständig ausgefah- renem Führungskörper;
- Figur 10: schematisch eine erfindungsgemäße Vorrichtung zum Verstellen einer Kopfstütze in einer weiteren Ausführungsform im Querschnitt; und
- Figur 11: eine Kopfstützanordnung mit einer erfindungsgemäßen Vorrichtung zum Verstellen der Kopfstütze gemäß Figur 1 in vollständig ausgefahrenem Zustand des Führungskörpers.

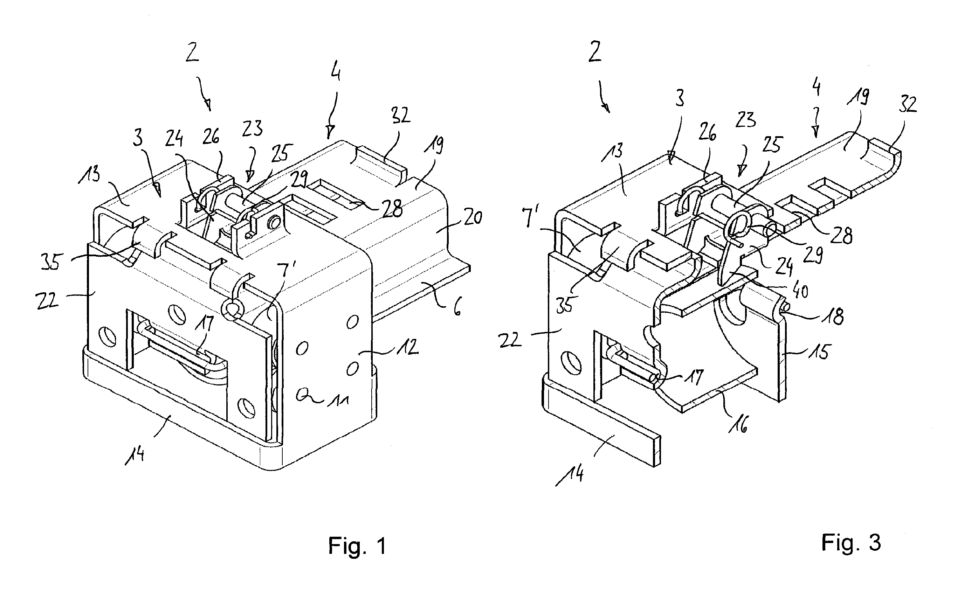

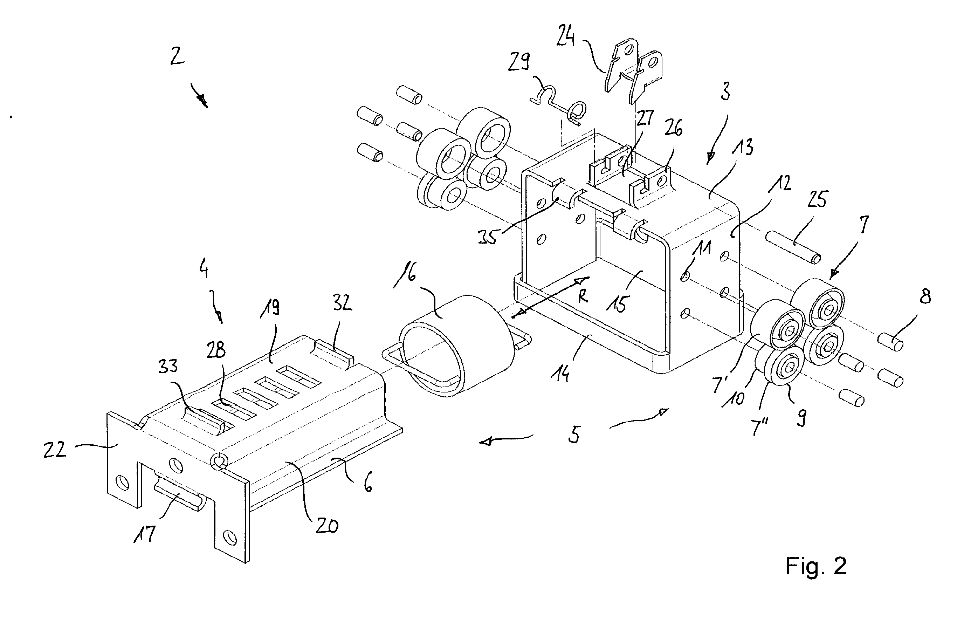

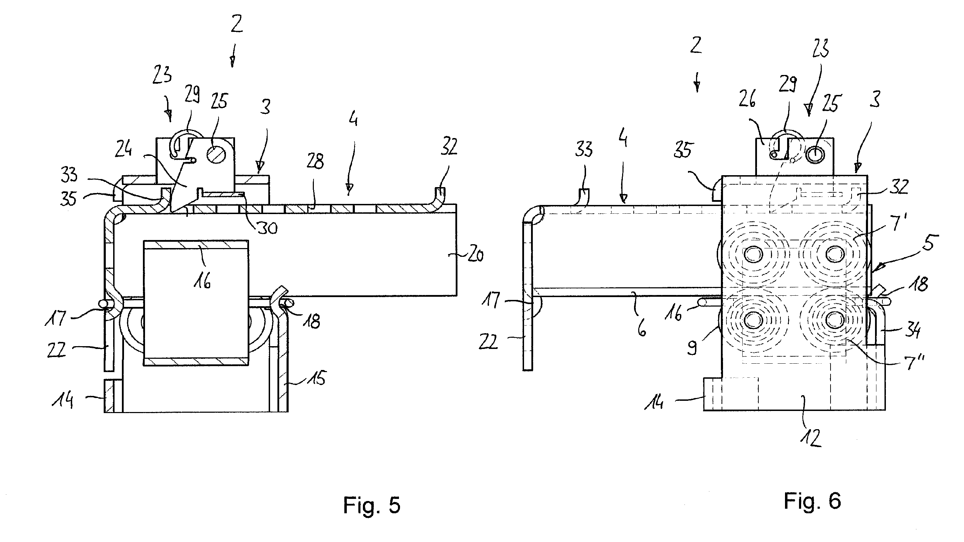

Die Figuren 1 bis 7, welche im Folgenden gemeinsam beschrieben werden, zeigen eine Vorrichtung zum Verstellen einer Kopfstütze. Die Vorrichtung 2 umfasst einen Grundkörper 3, der mit zumindest einem Kopfstützbügel oder einer Kopfstütze fest verbindbar ist, sowie einen relativ zum Grundkörper 3 linear verschiebbaren Schiebekörper 4, der mit dem jeweils anderen Teil, nämlich der Kopfstütze oder dem Kopfstützbügel festverbindbar ist. Insofern kann der Schiebekörper 4 auch als Schlitten bezeichnet werden. Zur linearen Verstellbarkeit des Schiebekörpers 4 relativ zum Grundkörper 3 sind zwei Führungseinheiten 5 vorgesehen, die jeweils einen Führungssteg 6 sowie mehrere Stützelemente 7 aufweisen. Die Stützelemente 7 sind in Form von Rollenkörpern gestaltet, die auf Zapfen 8 gegenüber dem Grundkörper 3 drehbar gelagert sind. Die Zapfen 8 werden in Bohrungen 11 des Grundkörpers 3 eingesteckt und befestigt. Jeweils zwei Rollenkörper 7', 7" bilden gemeinsam ein Paar, zwischen denen der zugehörige Führungssteg 6 geführt und insbesondere in vertikaler Richtung abgestützt ist. Zur seitlichen Führung des Führungssteges 6 ist vorgesehen, dass jeweils einer der Rollenkörper 7" eines Paares von Rollenkörpern einen umlaufenden Kragen 9 aufweist. Die Abstützung des Führungssteges 6 findet gegenüber einem Durchmesser reduzierten zylindrischen Abschnitt 10 statt. Jeweils 2 Paare von Rollenkörpern bilden gemeinsam eine Führungseinheit 5, wobei insgesamt zwei Führungseinheiten 5, nämlich eine je Seite des Grundkörpers 3, vorgesehen sind.

Es ist ersichtlich, dass der Grundkörper 3 einen rahmenförmigen Aufbau mit zwei einander gegenüberliegenden Seitenwänden 12 und einem diese miteinander verbindenden oberen Steg 13 aufweist. Im unteren Abschnitt sind ferner ein vorderer Verbindungssteg 14 sowie ein hinterer Verbindungssteg 15 vorgesehen. Zwischen den Seitenwänden 12 und den oberen und unteren Stegen 13, 14, 15 ist, in axialer Ansicht betrachtet, eine Durchgangsöffnung gebildet, in die der Schiebekörper 4 eintaucht.

Zwischen dem Grundkörper 3 und dem Schiebekörper 4 sind Federmittel 16 wirksam angeordnet. Die Federmittel 16 sind vorliegend in Form einer Zugfeder, insbesondere einer Schraubenfeder, gestaltet, welche mit einem ersten Ende an einer entsprechenden erste Stützfläche 17 des Schiebekörpers 4 abgestützt sind und mit einem gegenüberliegenden zweiten Ende an einer entsprechenden zweite Stützfläche 18 des Grundkörpers 3 abgestützt sind. Die erste und die zweite Stützfläche 17, 18 sind dabei insbesondere in Form von Nuten gestaltet, in welche die bügelförmigen Enden der Feder 16 eingreifen. Die Federmittel 16 sind so gestaltet, dass sie in Verschieberichtung R der beiden Führungseinheiten 5 wirken, wobei der Führungskörper 4 in Richtung zum Grundkörper 3 vorgespannt ist.

Der Schiebekörper 4 hat ein im Querschnitt betrachtet etwa U-förmiges Profil mit einem mittleren Abschnitt 19 sowie zwei hieran angeformte Seitenabschnitte 20. An den beiden Seitenabschnitten 20, welche einander gegenüberliegend angeordnet sind, sind die Führungsstege 6 ausgebildet. An seinem vom Grundkörper 3 weg weisenden Ende hat der Schiebekörper 4 Befestigungsmittel 22. Die Befestigungsmittel 22 sind flanschförmig gestaltet und dienen zum Anbringen einer Kopfstütze bzw. eines Polsters einer Kopfstütze. Der Schiebekörper 4 ist vorzugsweise als Umformteil aus Blech hergestellt.

Damit die Kopfstütze in Längsrichtung des Kraftfahrzeuges in verschiedenen Positionen überführt werden kann, ist ein Rastmechanismus 23 vorgesehen, der zwischen dem Grundkörper 3 und dem Schiebekörper 4 wirksam angeordnet ist. Der Rastmechanismus 23 umfasst ein Rastelement 24, das mittels eines Bolzens 25 schwenkbar gelagert ist. Dabei ist der Bolzen 25 in zwei einander gegenüberliegenden Lagerabschnitten 26, die an den oberen Steg 13 des Grundkörpers 3 angeformt sind, gehalten. Das Rastelement 24 kann eine zwischen den beiden Lagerabschnitten 26 gebildete Öffnung 27 nach unten hin durchgreifen. Das Rastelement 24 wirkt mit entsprechenden Rastausnehmungen 28 zusammen, die in dem mittleren Anschnitt 19 des Schiebekörpers 4 ausgebildet sind.

Es ist ein Federelement 29 vorgesehen, das insbesondere in Form einer Omega-Feder gestaltet ist. Das Federelement 29 hat die Besonderheit, dass es im Zusammenspiel mit dem Rastelement 24 zwei definierte Positionen einnehmen kann. Liegt der Kraftangriffspunkt zwischen dem Federelement 29 und dem Rastelement 24 unterhalb einer Verbindungslinie zwischen der Lagerung des Federelements 29 und der Lagerung des Rastelements 24, so beaufschlagt das Federelement 29 das Rastelement 24 in Richtung der Rastausnehmungen 28, das heißt nach unten. Auf diese Weise kann das Rastelement 24 beim Herausziehen des Schiebekörpers 4 aus dem Grundkörper 3 mit seiner Rastnase 40 in eine Rastausnehmung 28 nach der anderen einrasten und so den Schiebekörper 4 in einer entsprechen definierten Position fixieren. Liegt dem gegenüber der Kraftangriffspunkt zwischen dem Federelement 29 und dem Rastelement 24 oberhalb der genannten Verbindungslinie zwischen der Lagerung des Federelements und der Lagerung des Rastelements 24, dann beaufschlagt das Federelement 29 das Rastelement 24 nach oben, das heißt von den Rastausnehmungen 28 weg.

Das Überführen des Federelements 29 in diese Freigabestellung wird mittels eines Betätigungselements 32 erreicht, das in voll ausgezogener Position des Schiebekörpers 4 das Rastelement 24 nach oben verschwenkt, und zwar bis der Kraftangriffspunkt des Federelements die Totpunktlage überschritten hat und das Federelement 29 das Rastelement 24 nach oben beaufschlagt. Das Betätigungselement 32 ist in Form eines Vorsprungs ausgebildet, der an dem Schiebekörper 4 angeformt ist und der mit einem Betätigungshebel 30 des Rastelements 24 zusammenwirkt. Auf diese Weise wird das Rastelement 24 in die Freigabeposition beaufschlagt und der Schiebekörper 4 kann durch die in Richtung Grundkörper 3 wirkende Federkraft der Federmittel 16 vollständig in den Grundkörper 3 einfahren. Der Endanschlag ist durch ein Anschlagelement 33 gebildet, das mit dem Rastelement 24 zusammenwirkt und dieses wieder, entgegen der Vorspannkraft des Federelements 29 über die Totpunktlage hinaus, nach unten bewegt. Es ist ersichtlich, dass das Anschlagelement 33 an den Schiebekörper 4 angeformt ist und von einer gleichförmigen Oberseite des Schiebekörpers 4 nach oben absteht.

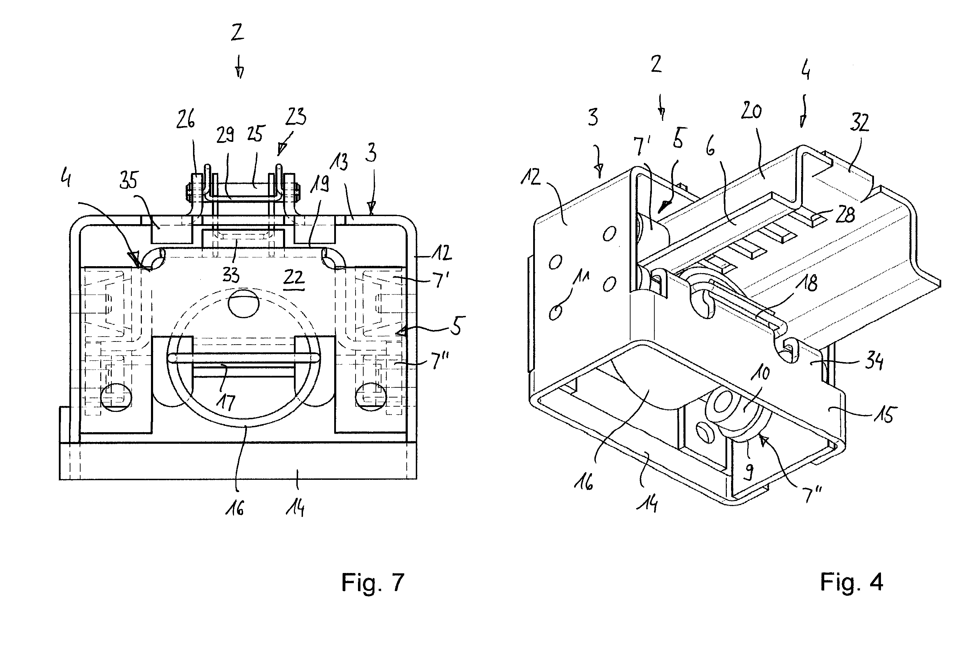

Wie insbesondere aus den Figuren 1 und 4 hervorgeht, sind neben den primären Stützelementen, welche durch die Rollenkörper gebildet sind, sekundäre Stützelemente 34, 35 vorgesehen, mit denen der Schiebekörper 4 sich gegenüber dem Grundkörper 3 abstützen kann. Dies ist für den Fall der Zerstörung oder einer eingeschränkten Funktionsfähigkeit der Führungseinheiten 5 von Wichtigkeit, was beispielsweise auf Grund eines Unfalls geschehen kann. Dabei gewährleisten die sekundären Stützelemente 34, 35, dass der Schiebekörper 4 sicher gegenüber dem Grundkörper 3 gehalten ist, so dass letztenendes die Kopfstütze sicher an dem Kopfstützbügel befestigt ist und die Sicherheit der Insassen gewährleistet ist. Die ersten sekundären Stützelemente 34 sind in Form von Laschen gestaltet, die von dem hinteren Verbindungssteg 15 nach oben abstehen und mit einer unteren Seite der Führungsstege 6 des Schiebekörpers 4 zusammenwirken. Die zweiten sekundären Stützelemente 35 sind an dem oberen Verbindungssteg 13, und zwar auf der axial gegenüberliegenden Seite des Grundkörpers 3 angeformt und wirken mit der oberen Anlagefläche des Schiebekörpers 4 an dem mittleren Abschnitt 19 zusammen. Durch diese Ausgestaltung wird ein Kippen des Schiebekörpers 4 gegenüber dem Grundkörper 3 nach oben verhindert.

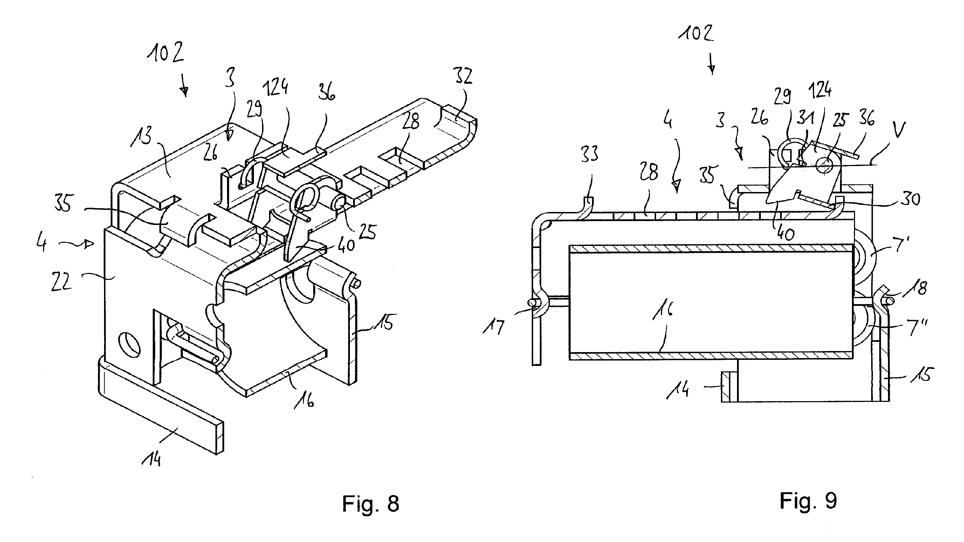

Die Figuren 8 und 9, welche im folgenden gemeinsam beschrieben werden, zeigen eine erfindungsgemäße Vorrichtung zum linearen Verstellen einer Kopfstütze in einer zweiten Ausführungsform. Diese entspricht hinsichtlich ihres Aufbaus und ihrer Funktionsweise weitestgehend derjenigen gemäß den Figuren 1 bis 7, so dass hinsichtlich der Gemeinsamkeiten auf die obige Beschreibung Bezug genommen wird. Im folgenden wird im wesentliche auf die Unterschiede eingegangen. Dabei sind gleiche Bauteile mit gleichen Bezugszeichen versehen und abgewandelte Bauteile sind mit um die Ziffer 100 erhöhten Bezugszeichen versehen.

Der einzige Unterschied liegt in der Ausgestaltung des Rastelements 124, an dem ein zusätzliches Betätigungselement 36 befestigt ist. Das Betätigungselement 36 lässt sich über einen hier nicht dargestellten Mechanismus in die Freigabestellung überführen. Der Betätigungsmechanismus umfasst ein extern bedienbares Element, das beispielsweise an der Kopfstütze angebracht sein kann. Durch Betätigen dieses Elements wird der Hebel 36 und damit das Rastelement 124 in die Freigabestellung überführt, so dass der Schiebekörper 4 gegenüber dem Grundkörper 3 in linearer Richtung, dass heißt vor und zurück, frei beweglich ist. Es ist ferner das Zusammenwirken des Betätigungselements 32 mit dem Hebel 30 erkennbar, wie bei der obigen Ausführungsform. Durch das Betätigungselement 32 wird der Hebel 30 im Uhrzeigersinn so weit verschwenkt, bis der Kraftangriffspunkt 31 der Feder 29 auf das Rastelement 24, 124 oberhalb der Verbindungslinie V zwischen dem Lager der Feder 29 und dem Lager des Rastelements 24, 124 liegt. In dieser Position wird das Rastelement 24, 124 von der Feder 29 in der Freigabestellung gehalten.

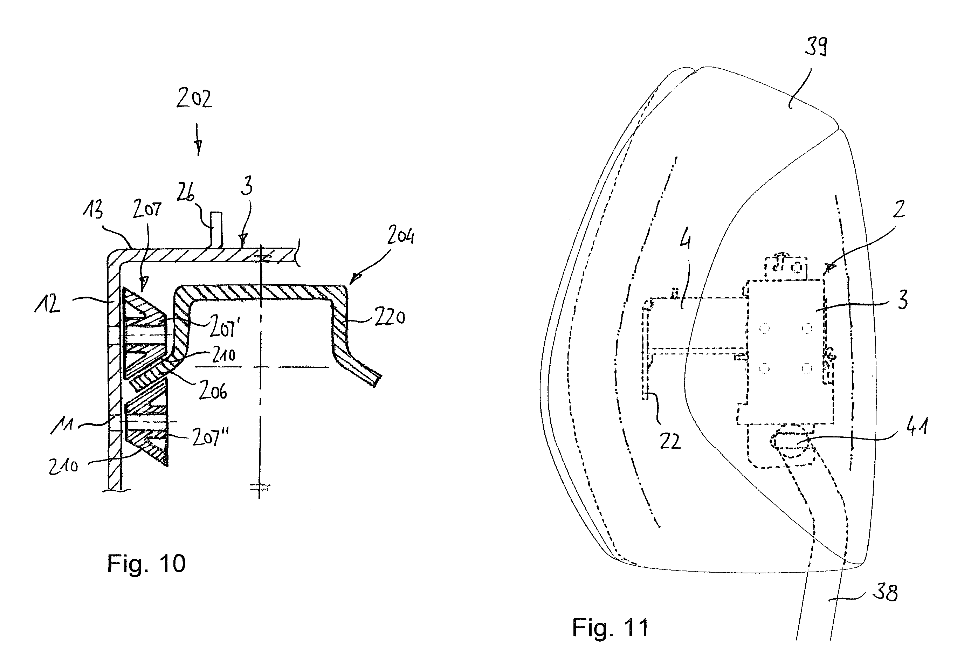

Figur 10 zeigt schematisch eine erfindungsgemäße Vorrichtung zum linearen Verstellen einer Kopfstütze in einer dritten Ausführungsform. Diese entspricht hinsichtlich ihres Aufbaus und ihrer Funktionsweise weitestgehend derjenigen gemäß den Figuren 1 bis 7, bzw. derjenigen gemäß den Figuren 8 und 9, so dass hinsichtlich der Gemeinsamkeiten auf die obige Beschreibung Bezug genommen wird. Die vorliegende Ausführungsform ist nur schematisch und teilweise geschnitten dargestellt, wobei es sich versteht, dass die hier nicht gezeigten Details wie in den übrigen Ausführungsformen ausgebildet sind. Im folgenden wird im wesentlichen auf die Unterschiede der vorliegenden Ausführungsform eingegangen. Dabei sind gleiche Bauteile mit gleichen Bezugszeichen versehen und abgewandelte Bauteile sind mit um die Ziffer 200 erhöhten Bezugszeichen versehen.

Der einzige Unterschied der vorliegenden Ausführungsform liegt in der Ausgestaltung der Führungseinheiten 205, und zwar der Stützelemente 207 und der Führungsstege 206. Es ist erkennbar, dass die Stützelemente 207 in Form von kegeligen Rollenkörpern gestaltet sind. Die Rollenkörper sind mittels hier nicht dargestellter Zapfen, welche in die Bohrungen 11 eingesteckt werden, drehbar an den Seitenwänden 12 des Grundkörpers 3 gelagert. Dabei sind die Rollenkörper 207', 207" eines Paares von Rollenkörpern 207 so angeordnet, dass sie in entgegengesetzte Richtung weisen, das heißt die Kegelwinkel der Außenflächen 210 öffnen sich in entgegengesetzte Richtungen. Zwischen den beiden kegeligen Außenflächen 210 des oberen und unteren Rollenkörpers 207', 207" ist der Führungssteg 206 angeordnet, der insbesondere spielfrei zwischen den Außenflächen 210 der oberen und unteren Rollenkörper 207', 207" verschiebbar gehalten ist. Dabei erstreckt sich die Verschieberichtung R senkrecht zur Zeichenebene.

Die Führungsstege 206 sind von den Schenkeln 220 des Schiebekörpers 204 seitlich abgebogen. Dabei schließen die Führungsstege 206 mit der Mittelebene E jeweils einen Winkel ein, der kleiner als 90° ist und vorzugsweise zwischen 60° und 30° beträgt. Durch die winklige Ausrichtung der beiden Führungsstege 206 und durch die Ausgestaltung der Rollenkörper 207 mit kegeligen Außenflächen 210 ergibt sich eine besonders gute, insbesondere spielfreie Abstützung des Schiebekörpers 204 relativ zum Grundkörper 3, und zwar in horizontale Richtung und in vertikale Richtung. Ein weiterer Vorteil der vorliegenden Ausführungsform liegt darin, dass die beiden Rollenkörper 207 eines Paares gleich gestaltet sein können, was sich wiederum günstig auf die Fertigung auswirkt. Wie schon bei den obigen Ausführungsformen, ist der Aufbau der vorliegenden Vorrichtung vorzugsweise symmetrisch in Bezug auf die Mittelebene E.

Die Figur 11 zeigt eine Kopfstützanordnung 37 mit einem Kopfstützbügel 38 und einer Kopfstütze 39 sowie eine erfindungsgemäße Vorrichtung 2 zum Verstellen der Kopfstütze gemäß einer der Figuren 1 bis 10. Es ist ersichtlich, dass die Vorrichtung 2 mit ihrem Grundkörper 3 an dem Kopfstützbügel 38 mit geeigneten Befestigungsmitteln 41 befestigt ist. Der Schiebekörper 4 ist wiederum mittels der Befestigungsmittel 22 mit der Kopfstütze 39 fest verbunden. Durch die erfindungsgemäß Vorrichtung 2 ergibt sich eine Verschiebbarkeit der Kopfstütze 39 in Fahrzeuglängsrichtung, dass heißt nach vorne bzw. nach hinten. Auf diese Weise kann der Fahrzeuginsasse die für ihn günstigste Position der Kopfstütze frei einstellen.

Die erfindungsgemäße Vorrichtung 2, 102, 202 bzw. die erfindungsgemäße Kopfstützanordnung 37 haben den Vorteil, dass der Schiebekörper 4 mittels der beiden Führungseinheiten 5 leichtgängig und ohne zu verkippen gegenüber dem Grundkörper 3 verschoben werden kann. Dementsprechend ist die Kopfstütze 39 gegenüber dem Kopfstützbügel 38 rein linear, d. h. ohne eine überlagerte Schwenkbewegung, verschiebbar. Die erfindungsgemäße Vorrichtung ermöglicht eine Verschiebung der Kopfstütze in Längsrichtung des Kraftfahrzeugs, die auch als X-Richtung bezeichnet wird, insbesondere zumindest etwa in horizontale Richtung. Die Ausbildung der beiden Führungseinheiten 5, 205 in Form von Rolleneinheiten ist besonders günstig für eine Bedienung der Kopfstütze 39 mit nur einer Hand bzw. bei einem außermittigem Kraftangriff an die Kopfstütze 39. Durch die stufenweise Einstellmöglichkeit des Abstands der Kopfstütze 39 zum Kopf wird der Komfort für den Insassen verbessert. Außerdem führt ein reduzierter Kopfabstand zu einem deutlichen Sicherheitsvorteil bei einem möglichen Heckaufprall.

### Bezugszeichenliste

- 2: Vorrichtung
- 3: Grundkörper
- 4: Schiebekörper
- 5: Führungseinheit
- 6: Führungssteg
- 7: Stützelement
- 8: Zapfen
- 9: Kragen
- 10: Zylinderabschnitt
- 11: Bohrung
- 12: Seitenwand
- 13: Steg
- 14: Steg
- 15: Steg
- 16: Federmittel
- 17: Stützfläche
- 18: Stützfläche
- 19: mittlerer Abschnitt
- 20: Schenkel
- 22: Befestigungsmittel
- 23: Rastmechanismus
- 24: Rastelement
- 25: Lagerbolzen
- 26: Lagerabschnitt
- 27: Öffnung
- 28: Rastausnehmung
- 29: Federelement
- 30: Betätigungshebel
- 31: Kraftangriffspunkt
- 32: Betätigungselement
- 33: Anschlagelement
- 34: sekundäres Stützelement
- 35: sekundäres Stützelement
- 36: Hebel
- 37: Kopfstützanordnung
- 38: Kopfstützbügel
- 39: Kopfstütze
- 40: Rastnase
- 41: Betätigungsmittel

- E: Mittelebene
- R: Verschieberichtung
- V: Verbindungslinie

## Patentansprüche

1. Vorrichtung zum Verstellen einer Kopfstütze, insbesondere für einen Sitz in einem Kraftfahrzeug, umfassend
einen Grundkörper (3),
einen Schiebekörper (4),
zumindest zwei Führungseinheiten (5, 205), mit denen der Schiebekörper (4, 204) gegenüber dem Grundkörper (3) in eine Verschieberichtung (R) linear verschiebbar geführt ist;
wobei die Führungseinheiten (5, 205) jeweils einen Führungssteg (6) aufweisen, der mit einem der beiden Teile, Grundkörper (3) oder Schiebekörper (4, 204), fest verbunden ist, sowie zumindest zwei Stützelemente (7, 207), die an dem anderen der beiden Teile, Schiebekörper (4, 204) oder Grundkörper (3), angeordnet sind, wobei die zumindest zwei Stützelemente (7, 207) den Führungssteg (6) senkrecht zur Verschieberichtung (R) abstützen.

2. Vorrichtung nach Anspruch 1,
**dadurch gekennzeichnet,**
**dass** die Stützelemente (7, 207) der Führungseinheiten Rollenkörper (7', 7"; 207', 207") aufweisen, die an einem der beiden Teile, Grundkörper (3) oder Schiebekörper (4, 204), drehbar gelagert sind.

3. Vorrichtung nach Anspruch 2,
**dadurch gekennzeichnet,**
**dass** die zumindest zwei Führungsstege (6, 206) mit Vorspannung zwischen den Rollenkörpern (7', 7"; 207', 207") linear beweglich gehalten sind.

4. Vorrichtung nach einem der Ansprüche 1 bis 3,
**dadurch gekennzeichnet,**
**dass** Federmittel (16) vorgesehen sind, die zwischen dem Grundkörper (3) und dem Schiebekörper (4, 204) wirksam sind, insbesondere in Verschieberichtung (R).

5. Vorrichtung nach einem der Ansprüche 1 bis 4,
**dadurch gekennzeichnet,**
**dass** ein Rastmechanismus (23) vorgesehen ist, der zwischen dem Grundkörper (3) und dem Schiebekörper (4, 204) wirksam ist und derart gestaltet ist, dass der Schiebekörper (4, 204) gegenüber dem Grundkörper (3) mehrere definierte Rastpositionen einnehmen kann, die zwischen der eingeschobenen Position und der ausgezogenen Position liegen.

6. Vorrichtung nach Anspruch 5,
**dadurch gekennzeichnet,**
**dass** der Rastmechanismus (23) mehrere Rastausnehmungen (28) umfasst, die an einem der beiden Teile, Grundkörper (3) oder Schiebekörper (4, 204), vorgesehen sind, sowie ein Rastelement (24, 124), das an dem anderen der beiden Teile, Schiebekörper (4, 204) oder Grundkörper (3), angebracht ist und das in die Rastausnehmungen (28) eingreifen kann.

7. Vorrichtung nach Anspruch 6,
**dadurch gekennzeichnet,**
**dass** ein Federelement (29) vorgesehen ist, welches das Rastelement (24, 124) in Richtung der Rastausnehmungen (28) beaufschlagt.

8. Vorrichtung nach einem der Ansprüche 6 oder 7,
**dadurch gekennzeichnet,**
**dass** ein Endanschlag (33) vorgesehen ist, gegen den das Rastelement (24, 124) anschlagen kann, wobei der Schiebekörper (4, 204) in der vollständig eingeschobenen Position gehalten ist.

9. Vorrichtung nach einem der Ansprüche 5 bis 8,
**dadurch gekennzeichnet,**
**dass** ein Betätigungselement (32) vorgesehen ist, mit dem die Funktion des Rastmechanismus (23) aufhebbar ist, wenn sich der Schiebekörper (4, 204) in der vollständig ausgerückten Position befindet.

10. Vorrichtung nach Anspruch 9,
**dadurch gekennzeichnet,**
**dass** das Rastelement (24, 124) mittels des Betätigungselements (32) entgegen der Vorspannkraft des Federelements (29) verschwenkbar ist.

11. Vorrichtung nach Anspruch 9 oder 10,
**dadurch gekennzeichnet,**
**dass** das Rastelement (24, 124) durch Einwirken des Betätigungselements (32) über eine Totpunktlage des Federelements (29) bewegbar ist, wobei das Rastelement (24, 124) nach Überschreiten der Totpunktlage von dem Federelement (29) in Richtung von den Rastausnehmungen (28) weg beaufschlagt wird.

12. Vorrichtung nach einem der Ansprüche 1 bis 11,
**dadurch gekennzeichnet,**
**dass** sekundäre Stützelemente (34, 35) vorgesehen sind, mit denen der Schiebekörper (4, 204) bei Zerstörung oder eingeschränkter Funktion der Führungseinheiten (5, 205), beispielsweise aufgrund eines Unfalls, gegenüber dem Grundkörper (3) abstützbar ist.

13. Vorrichtung nach Anspruch 12,
**dadurch gekennzeichnet,**
**dass** die sekundären Stützelemente (34, 35) zumindest eine erste Stützfläche an einem ersten Ende des Grundkörpers (3) sowie zumindest eine zweite Stützfläche an einem entgegengesetzten zweiten Ende des Grundkörpers (3) aufweisen, wobei die erste Stützfläche auf eine obere Anlagefläche des Führungskörpers (4, 204) einwirkt, und die zweite Stützfläche auf eine untere Anlagefläche des Führungskörpers (4, 204) einwirkt.

14. Vorrichtung nach einem der Ansprüche 1 bis 13,
**dadurch gekennzeichnet,**
**dass** der Schiebekörper (4, 204) und/oder der Grundkörper (3) als Umformteil aus Blech hergestellt ist/sind.

15. Kopfstützenanordnung, insbesondere für einen Sitz eines Kraftfahrzeugs, umfassend
eine Kopfstütze (39), die mittels einer Vorrichtung nach einem der Ansprüche 1 bis 14 mit zumindest einem Kopfstützbügel (38) verbunden ist,
wobei der Grundkörper (3) der Vorrichtung mit dem zumindest einen Kopfstützbügel (38) fest verbunden ist, und
wobei der Schiebekörper (4, 204) der Vorrichtung zumindest mittelbar mit der Kopfstütze (39) fest verbunden ist.
